Europäisches Patentamt

**European Patent Office**

Office européen des brevets

(19)

(11) Publication number: **0 023 057**

**A1**

(12) # EUROPEAN PATENT APPLICATION

(21) Application number: **80200645.2**

(22) Date of filing: **04.07.80**

(51) Int. Cl.³: **C 01 B 25/46**
**C 22 B 60/02**

(30) Priority: **24.07.79 NL 7905699**

(43) Date of publication of application:
**28.01.81 Bulletin 81/4**

(84) Designated Contracting States:
**BE DE FR GB IT NL**

(71) Applicant: **STAMICARBON B.V.**
**Postbus 10**
**NL-6160 MC Geleen(NL)**

(72) Inventor: **Tanke, Marcellinus Aloysius**
**Eugeniahof 15**
**NL-6121 AJ Born(NL)**

(72) Inventor: **Weterings, Cornelis Antonius Maria**
**Schineksstraat 60**
**NL-6171 AP Stein(NL)**

(72) Inventor: **van Hardeveld, Rudolf**
**Vondellaan 15**
**NL-6165 EB Geleen(NL)**

(74) Representative: **Roeffen, Wilhelmus Johannes**
**Maria et al,**
**OCTROOIBUREAU DSM Postbus 9**
**NL-6160 MA Geleen(NL)**

(54) **Process for preparing phosphates and a uranium-containing concentrate from wet-process phosphoric acid, as well as phosphates and uranium-containing concentrate obtained with application of this process.**

(57) Preparing phosphates and a uranium containing concentrate by treating wet-process phosphoric acid with an inorganic fluorine compound, an organic dispersant and a reducing agent, separating off the resulting uranium containing precipitate, adding to the remaining mixture a compound which reacts with phosphoric acid to form an insoluble phosphate and separating the precipitated phosphate from the mixture.

EP 0 023 057 A1

PROCESS FOR PREPARING PHOSPHATES AND A URANIUM-CONTAINING CONCENTRATE FROM WET-PROCESS PHOSPHORIC ACID, AS WELL AS PHOSPHATES AND URANIUM-CONTAINING CONCENTRATE OBTAINED WITH APPLICATION OF THIS PROCESS

The invention relates to a process for preparing phosphates and a uranium-containing concentrate from wet-process phosphoric acid, in which the phosphoric acid is treated with an inorganic fluorine compound in the presence of an organic dispersant and a reducing agent, the resultant uranium-containing precipitate is separated out, and the dispersant is recovered from the remaining mixture of phosphoric acid, dispersant and water.

Such a process for obtaining a uranium-containing concentrate is described in the non-prepublished Dutch Patent Application No. 7900581. The main product obtained by that process is a purified phosphoric acid, by separation, for instance through distillation, of the mixture of phosphoric acid, organic dispersant and water, after which the dispersant-water mixture, freed of water and impurities, may be recirculated. The recovered, purified phosphoric acid can be used for a variety of purposes, for instance as basic material for production of high-grade fertilizers, technicalgrade phosphates and animal feed phosphate.

If this process is applied for preparing phosphates, the phosphoric acid is thus first separated from the dispersant, an operation which requires energy and investments, and the phosphoric acid so obtained is converted into phosphates, in some cases after concentrating. Also, it has appeared that in the case of separation through distillation, impurities left in the mixture of phosphoric acid, dispersant and water, such as metal and fluorine compounds, remain in the phosphoric acid.

The invention now provides a process offering the possibility of preparing phosphates direct from a mixture of phosphoric acid, dispersant and water.

According to the invention, this is achieved by adding to the mixture of phosphoric acid, dispersant and water a compound which reacts with phosphoric acid to form a phosphate which is insoluble in the dispersant-water mixture, and separating the precipitated phosphate from the dispersant-water mixture.

An advantage of this process is that a substantial portion of the impurities left in the mixture of dispersant, phosphoric acid and water remains in the dispersant-water mixture upon precipitation of the phosphate.

Moreover it has appeared that the solubility of many phosphates in the system of phosphoric acid, dispersant and water is considerably less than in the system of phosphoric acid and water. This makes it possible in the process according to the invention to produce highly concentrated phosphates direct from a mixture of dispersant and phosphoric acid which still contains a substantial quantity of water without, as is usual in the known processes for conversion of phosphoric acid into phosphates, having to concentrate the phosphoric acid first. Thus it is possible, for instance, to produce highly concentrated ammonium phosphate direct from a mixture of acetone and phosphoric acid with a $P_2O_5$ content of about 28 % by wt. by introducing ammonia, while in the known preparation of ammonium phosphate by ammoniation of phosphoric acid, the acid started from is required to have a $P_2O_5$ content of 40-45 % by wt.

The compounds reacting with phosphoric acid to form insoluble phosphates are, by preference, besides ammonia, soluble ammonium compounds, such as ammonium hydroxide or carbonate, soluble compounds of alkali or alkaline earth metals, such as hydroxide or carbonate of sodium, potassium or calcium, and urea. The products obtained then are, respectively, an ammonium orthophosphate, such as mono- or di-ammonium orthophosphate, alkali phosphates, such as orthophosphates of sodium or potassium, phosphates of alkaline earth metals, such as di-calcium phosphate, and urea phosphate. It is also possible to use two or more of said substances in combination.

The compounds reacting with phosphoric acid to form phosphates can be added in various forms. The ammonia, for instance, may be added in a gaseous, liquid as well as dissolved form. The above-mentioned salts and hydroxides (of ammonia, alkali or alkaline earth metals) may be added in a solid form or in the form of a solution.

Urea may also be added solid, molten or as a solution.

When using compounds of ammonia and alkali (earth) metals as precipitation agent, virtually quantitative separation of the $P_2O_5$ from the mixture is achieved. When using urea as precipitation agent, a $P_2O_5$ precipitation efficiency of 50-70 % is achieved.

The temperature during the precipitation may be varied. The use of lower temperatures is advantageous in that the solubility of the phosphate is also lower. However, when using certain compounds of ammonia and alkali (earth) metals as precipitation agent, an exothermic reaction occurs, releasing a rather considerable amount of heat.

This heat generation can be dissipated, in principle, by cooling of the reaction mixture. It is also possible, however, to utilize this heat for evaporation of part of the dispersant during the precipitation, provided that this does not cause the viscosity of the mixture to increase excessively. This excessive increase can be suppressed by carrying out the precipitation at elevated pressure, so that evaporation of the dispersant is not effected until in a later stage of the process.

The precipitated phosphate can be separated from the dispersant-water mixture in various ways, for instance by filtration, centrifugation, decantation. The recovered phosphate can be processed further in a known way, for instance washed with virtually inert liquids.

The phosphates obtained by the process according to the invention contain only a small quantity of residual impurities. Except as component of high-grade fertilizers, they can be used direct, therefore, in many technical applications.

It has been found that when urea is used for precipitation, urea phosphate of such purity is obtained that it is suitable for direct application in the animal feed industry.

In precipitation of urea phosphate according to the invention, the $P_2O_5$ precipitation efficiency is about 50-70 %. It has been found that this precipitation efficiency can be enhanced by adding sulphate

-4-

ions, for instance in the form of sulphuric acid, to the mixture of phosphoric acid, dispersant and water.

The mixture of phosphoric acid, urea, dispersant, water and impuritie resulting upon recovery of the precipitated urea phosphate, can be treated further in various ways. For instance, the dispersant may be separated out, and the remaining liquid processed into a suspension fertilizer through addition of ammonia and a stabilizing agent. However, this fertilizer then contains most of the impurities present in the original mixture.

It is also possible to separate the dispersant from the mixture and then evaporate the remaining water, so that a urea phosphate melt is obtained. This, too, then contains most of the impurities originating from the wet-process phosphoric acid which were originally present in the mixture.

Preferably, therefore, the urea present in the remaining mixture is hydrolized at elevated temperature into ammonia and carbon dioxide. This ammonia reacts with the phosphoric acid to form ammonium phosphate which is insoluble in the system. In some cases, an extra quantity of ammonia may be added depending on the quantity of urea originally used, and the desired ammonium phosphate. The resultant, precipitated ammonium phosphate may be separated from the dispersant-water mixture in a known way as indicated above.

The dispersant-water mixture remaining after recovery of the phosphate can be treated further in a known way, for instance rectifiec for removal of water and impurities, and used anew for the uranium precipitation.

It is also possible to use only part of the mixture of phosphoric acid, dispersant and water according to the invention for recovery of a phosphate, and to process the remaining portion of the mixture into phosphoric acid, for instance through distillation.

The process according to the invention may be used for treatment of mixtures of phosphoric acid and uranium-containing concentrate obtained with application of various inorganic fluorine compounds as uranium-precipitation agent, and various organic dispersant The inorganic fluorine compound used is preferably ammonium fluoride. The organic dispersant used may be for instance, water-miscible alcohols ketones, ethers, carboxylic acids and/or carbonitriles.

The combination of ammonium fluoride and acetone or methanol has appeared to be highly advantageous. The reducing agent for reducing the uranium from the hexavalent to the tetravalent state may be, for instance, powdered metallic iron, zinc or aluminium. It is also possible to make use of electrolytic reduction. It has appeared to be advantageous to add the reducing agent after the inorganic fluorine compound, because then a smaller quantity of precipitate is formed in which the uranium is yet virtually quantitatively present.

In principle, the process according to the invention may be applied to each type of wet-process phosphoric acid. Both the so-called green wet-process phosphoric acid (obtained from calcinated rock phosphate) and the so-called black wet-process phosphoric acid (which contains a certain quantity of impurities) can be treated by the process according to the invention without additional pre-treatment. The process may also be applied direct to dilute phosphoric acid (the so-called filter-grade acid) as well as to concentrated phosphoric acid, and even to so-called super phosphoric acids.

The uranium-containing precipitate formed in the process also contains the greater part of the metals present in the phosphoric acid, for instance magnesium, aluminium, cobalt, vanadium, yttrium, titanium, chromium, strontium, lead and rare earth metals, such as lanthanium, cerium, neodynium and ytterbium. This precipitate may be separated from the mixture of phosphoric acid and dispersant through, for instance, filtration or centrifugation. The recovered uranium-containing concentrate can, if so desired, be processed by the various methods known as such.

The invention will be further elucidated by means of the following examples.

Example 1

100 g of wet-process phosphoric acid with a P2O5 content of 29.0 % by wt. was introduced into a beaker. Next, 4 g of iron chips was added and the mixture was stirred for 30 minutes, after which the iron was removed from the liquid with the help of a magnet. Subsequently, 0.5 g of solid ammonium fluoride and 250 g of acetone were added, after which the mixture was stirred for 1 hour. The resultant precipitate (6 g) was filtered off. Analysis showed that more than 90 % of the uranium present in the crude phosphoric acid had been precipitated.

The resultant filtrate was a liquid mixture, consisting of 13.8 % by wt. of phosphoric acid, 66 % by wt. of acetone and 19 % by wt. of water. In two reactors provided with reflux coolers, this filtrate was treated with gaseous ammonia at a temperature of about 30 $^{\circ}$C and atmospheric pressure in two steps, viz. up to pH = 2-2.5 in the 1st reactor and up to pH = 3-3.5 in the 2nd reactor. The retention time in each reactor was about 30 minutes.

The mixture from the second reactor was filtered off; the filter cake was washed with a little acetone and dried at 50 $^{\circ}$C for 12 hours. White crystals were obtained, which upon analysis appeared to consist virtually quantitatively of mono-ammonium phosphate. More than 99 % of the $P_2O_5$ supplied was recovered. The nitrogen efficiency, relative to the ammonia supplied, was > 95 %.

The filtrate remaining after filtering-off was distilled, whereby acetone was recovered.

The composition of the crude phosphoric acid and of the mono-ammonium phosphate crystals obtained was determined. The results are given in table I.

These results show that a major portion of the impurities originally present in the phosphoric acid is not found back in the mono-ammonium phosphate crystals.

Table I

|  | phosphoric acid | mono-ammonium phosphate crystals | | di-ammonium-phosphate crystals | |
|---|---|---|---|---|---|
|  | analysis | analysis | percentage relative to quantity present in $H_3PO_4$ | analysis | percentage relative to quantity present in $H_3PO_4$ |
| $P_2O_5$ | 29.1 wt. % | 60.6 wt. % | 100 | 55.0 wt.% | 100 |
| N | – " | 12.7 " | – | 21.2 " | – |
| $SO_4$ | 2.2 " | 0.70 " | 15.3 | 0.83 " | 20.0 |
| $Al_2O_3$ | 0.33 " | 0.02 " | 2.91 | 0.01 " | 1.6 |
| $Fe_2O_3$ | 0.19 " | 0.20 " | 50.6 | 0.21 " | 58.5 |
| CaO | 0.51 " | 0.2 " | 18.8 | 0.1 " | 10.4 |
| MgO | 0.53 " | 0.23 " | 20.8 | 0.23 " | 23.0 |
| F | 1.68 " | 0.73 " | 20.9 | 0.32 " | 10.1 |
| $SiO_2$ | 0.55 " | 0.33 " | 28.8 | 0.07 " | 6.7 |
| Na | 0.07 " | – | – | – | – |
| Cl | 0.03 " | – | – | – | – |
| $K_2O$ | 0.02 " | – | – | – | – |
| Hg | 0.3 mg/kg | – | – | – | – |
| Cd | 17 " | 11 mg/kg | 31.1 | 20 mg/kg | 62.3 |
| As | 11 " | – | – | 8 " | 38.5 |
| Pb | <1 " | – | – | – | – |
| Cr | 170 " | – | – | – | – |
| Ni | 28 " | – | – | – | – |
| Cu | 25 " | – | – | – | – |
| Zn | 270 " | – | – | – | – |
| Mn | 10 " | – | – | – | – |

Example 2

In substantially the same way, the filtrate obtained after filtering off a uranium-containing precipitate, of the same composition as in example 1, was treated with gaseous ammonia at a temperatur of about 30 $^{\circ}$C and atmospheric pressure, but now in three steps, viz. up to a pH of about 2.5 in the first step, up to a pH of about 8 in the second step, and up to a pH of about 9 in the third step. The mixture obtained in the third step was filtered; the filter cake was washed with a little acetone and dried at 50 $^{\circ}$C for about 12 hours.
Crystals were obtained which consisted virtually quantitatively of di-ammonium phosphate.
The efficiency relative to P2O5 supplied was 99.8 % and the nitrogen efficiency, relative to ammonia supplied, 96 %. The filtrate, containing 0.02 % by wt. of P2O5 and 0.22 % by wt. of N, was processed further in the same way as in example 1.

The composition of the di-ammonium phosphate crystals obtained is also shown in table 1. This clearly shows that a major portion of the impurities present in the phosphoric acid is not found back in the ammonium phosphate crystals.


Example 3

In substantially the same way as in example 1,100 g of wet-process phosphoric acid, with a P2O5 content of 52 %, was treated with 4 g of iron chips, 1 g of solid ammonium fluoride and 250 g of acetone. The uranium precipitation efficiency was more than 90 %.
The filtrate obtained after filtering off the uraniumcontaining precipitate consisted of 24.8 % $H_3PO_4$, 66 % acetone and 8 % water.
To this filtrate, solid sodium carbonate was added in a quantity which was stoichiometrically sufficient for formation of tri-sodium phosphate. The temperature rose to 40-50 $^{\circ}$C as a result of the reaction heat released.
Next, the mixture was filtered off; the filter cake was washed with a little acetone and dried.
The product obtained consisted of crystals with a Na : P atomic ratio of about 1.6 : 1, i.e. a mixture of mono- and di-sodium phosphate. The rest of the sodium was present as soda. The filtrate was processed further in the same way as in example 1.

The efficiency relative to P2O5 supplied was > 99.9 %; the sodium efficiency was also >99.9 %.


Example 4

To the filtrate, after uranium filtration, obtained by the procedure of example 3, a 45 % by wt. aqueous solution of NaOH was added at a temperature of about 30 °C in such a quantity that the Na:P atomic ratio of the mixture was 1.67 : 1.

The temperature of the mixture rose to about 50 °C by the reaction heat released.

Next , the mixture was filtered, the filter cake was washed with a little acetone and dried.

The product obtained consisted of crystals with a Na:P ratio of 1.67:1, i.e. a mixture of mono- and di-sodium orthophosphate.

The filtrate was processed further in the same way as in example 1.

The efficiency relative to P2O5 supplied was 99.0 %; the sodium efficiency was 99.8 %.

The composition of the phosphoric acid used and of the crystals obtained was determined. The results are shown in table II.

In the same manner as described above, the filtrate was treated with a NaOH solution, but now with such a quantity that the Na:P ratio of the reaction mixture was 3.0:1.

The product obtained after filtration consisted of crystals with a Na:P ratio of 3.0:1. The efficiency relative to P2O5 supplied was >97 %, the sodium efficiency 99.9 %.


Example 5

To the filtrate, after uranium filtration, obtained by the procedure of example 3, urea in the form of prills was added at a temperature of about 30 °C. the quantity of urea was equal to the stoichiometric quantity required for formation of urea phosphate. The mixture was subsequently filtered; the filter cake was washed and dried.

The P2O5 efficiency was 70 %.

White crystals were obtained, consisting virtually quantitatively of urea phosphate.

-10-

The composition of the phosphoric acid used and of the crystals obtained was determined.

The results are also shown in table II.

Table II

|  | phosphoric acid | Na phosphate (N:P = 1,67) | urea phosphate |
|---|---|---|---|
| $P_2O_5$ | 52 % by wt. | 29.6 % by wt. | 46.2 % by wt. |
| N | – | – | 17.3 !" |
| $SO_4$ | 2.70 " | 0.52 " | 0.04 " |
| $Al_2O_3$ | 0.40 " | < 0.01 " | < 0.01 " |
| $Fe_2O_3$ | 0.29 " | 0.03 " | 0.01 " |
| CaO | 0.14 " | 0.01 " | < 0.01 " |
| MgO | 0.87 " | 0.05 " | < 0.01 " |
| F | 0.65 " | 0.095 " | 0.012 " |
| $SiO_2$ | 0.04 " | – | 0.04 " |
| Na | 0.02 " | 15.7 " | – |
| Cd | 36 mg/kg | – | 2 mg/kg |
| As | 10 " | – | 2 " |

CLAIMS

1. Process for preparing phosphates and a uranium-containing concentrate from wet-process phosphoric acid, in which the phosphoric acid is treated with an inorganic fluorine compound in the presence of an organic dispersant and a reducing agent, the resultant uranium-containing precipitate is separated out, and the dispersant is recovered from the remaining mixture of phosphoric acid, dispersant and water, characterized in that to the mixture of phosphoric acid, dispersant and water a compound is added which reacts with the phosphoric acid to form a phosphate which is insoluble in the dispersant-water mixture, and the precipitated phosphate is separated from the dispersant-water mixture.

2. Process according to claim 1, characterized in that the phosphoric acid is precipitated as ammonium phosphate through addition of ammonia or a soluble ammonium compound.

3. Process according to claim 1, characterized in that the phosphoric acid is precipitated as phosphate of alkali or alkaline earth metals through addition of a soluble alkali or alkaline earth metal compound.

4. Process according to claim 1, characterized in that the phosphoric acid is precipitated as urea phosphate through addition of urea.

5. Process according to claim 4, characterized in that after separating out the precipitated urea phosphate, the urea present in the remaining mixture is hydrolized into ammonia and carbon dioxide at elevated temperature and pressure.

6. Process according to claim 4 or 5, characterized in that ammonia is added to the remaining, urea-containing mixture.

7. Process according to claim 1, substantially as described, and further elucidated in the examples.

8. Uranium-containing concentrate obtained through application of the process according to any one of the claims 1-7.

9. Phosphates obtained through application of the process according to any one of the claims 1-7.

0023057

**European Patent Office**

**EUROPEAN SEARCH REPORT**

Application number

EP 80 30 004?

## DOCUMENTS CONSIDERED TO BE RELEVANT

| Category | Citation of document with indication, where appropriate, of relevant passages | Relevant to claim |
|---|---|---|
| A | FR - A - 2 327 961 (CENTRE D'ETUDES ET DE RECHERCHES DES PHOSPHATES MINERAUX CERPHOS) & DE - A - 2 645 477 & GB - A - 1 550 473 (28-11-1979) --- | |
| A | US - A - 3 306 445 (M. MARTIN et al.) --- | |
| A | US - A - 3 894 143 (G. VON SEMEL et al.) --- | |
| A | US - A - 1 929 441 (C.H. MILLIGAN) --- | |
| A | CHEMICAL ABSTRACTS, vol. 90, no. 16, April 16, 1979, page 142, left-hand column, abstract 124.011g COLUMBUS, OHIO (US) & SU - A - 630 222 (SOKOLOV et al.) (Oct. 30, 1978) --- | |
| A | US - A - 4 117 042 (K. BEITZ et al.) --- | |
| A | US - A - 4 152 402 (H.K. WALTERS JR. et al.) --- | |
| A | US - H - 470 007 (J.F. McCULLOUGH et al.) --- | |
| A | US - A - 3 880 950 (C.A. WAMSER) ------ | |

### CLASSIFICATION OF THE APPLICATION (Int. Cl.³)

C 01 B 25/46
C 22 B 60/02

### TECHNICAL FIELDS SEARCHED (Int. Cl.³)

C 22 B 60/02
C 01 B 25/46

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 24-10-1980 | BREBION |

EPO Form 1503.1   06.78

BAD ORIGINAL